# EUROPEAN PATENT SPECIFICATION

(11) **EP 3 955 422 B1**
(45) Date of publication and mention of the grant of the patent: **09.12.2026**
(21) Application number: 21197558.6
(22) Date of filing: 02.02.2016
(51) Int. Cl.: H02K 1/14, H02K 7/06, H02K 7/14, B25J 9/12, H02K 1/278, F16H 25/20

(54) **MOTOR HAVING NON-CIRCULAR STATOR**
MOTOR MIT NICHT KREISFÖRMIGEM STATOR
MOTEUR DOTÉ D'UN STATOR NON CIRCULAIRE

(30) Priority: 02.02.2015 US 201562110752 P
(43) Date of publication of application: 16.02.2022
(60) Divisional application: 26216638.2
(62) Document number(s) of the earlier application(s) in accordance with Art. 76 EPC: 16747072.3 / 3 241 267
(73) Proprietor: Persimmon Technologies Corporation, Wakefield, MA 01880 (US)
(72) Inventor: KRISHNASAMY, Jayaraman, Boxborough, 01719 (US); HOSEK, Martin, Lowell, 01854 (US); POOLE, Dennis, East Derry, 03038 (US)
(74) Representative: Swindell & Pearson Limited

(56) References cited:
- CN-A- 103 640 028
- US-A- 5 107 716
- US-A1- 2007 020 081
- US-A1- 2012 176 074
- US-A1- 2013 039 726
- US-A1- 2014 305 246
- US-B2- 8 716 909

## Description

### BACKGROUND

### Technical Field

The exemplary and non-limiting embodiments relate generally to electric motors and, more particularly, to a motor having a non-circular stator.

### Brief Description of Prior Developments

Electric motors are generally used to provide translational or rotational motion to the various moving elements of automated mechanical devices. The electric motors used typically comprise rotating elements (rotors) assembled with stationary elements (stators). Magnets are located between the rotating and stationary elements or directly on the rotating element. Coils are wound around soft iron cores on the stationary elements and are located proximate the magnets.

In operating an electric motor, an electric current is passed through the coils, and a magnetic field is generated, which acts upon the magnets. When the magnetic field acts upon the magnets, one side of the rotating element is pushed and an opposing side of the rotating element is pulled, which thereby causes the rotating element to rotate relative to the stationary element. Efficiency of the rotation is based at least in part on the shape of the magnetic components used and the characteristics of the materials used in the fabrication of the electric motor.

US 8 716 909 B2 discloses a substrate transport apparatus including a drive section and a first movable arm assembly. The drive section includes a first motor. The first motor includes a stator and a passive rotor. The first movable arm assembly is connected to the first motor. The substrate transport apparatus is configured for the first movable arm assembly to be positionable in a vacuum chamber with the passive rotor being in communication with an environment inside the vacuum chamber.

US 2014/305246 A1 discloses a rotary motor including a rotor and at least one stator. The rotor has a shaft. The stator has an iron core and a coil wound around the iron core. A cross section of the iron core perpendicular to the shaft has a long axis and a short axis, and the rotor is disposed on an extension line of the long axis.

US 2013/039726 A1 discloses substrate transport systems, apparatus, and methods. The systems are adapted to efficiently put or pick substrates at a destination by rotating a boom linkage to a position adjacent to the destination and then independently actuating an upper arm link housing and one or more wrist members to put or pick one or more substrates at the destination wherein the wrist member is independently actuated relative to the forearm link housing and the motion of the forearm link member is kinematically linked to the motion of the upper arm link housing. Numerous other aspects are provided.

### SUMMARY

The following summary is merely intended to be exemplary. The summary is not intended to limit the scope of the claims.

In accordance with one aspect, an apparatus comprises a motor comprising: a rotor; and a stator, wherein the rotor is located at least partially in a rotor receiving area of the stator, wherein the stator comprises: a stator member having teeth and at least one component receiving area of the stator spaced from the rotor receiving area, wherein the teeth comprise a first set of the teeth and a second set of the teeth, wherein the teeth of the first set of teeth are longer in a radial direction from the rotor receiving area than the teeth of the second set of teeth, and wherein the second set of teeth are located closer to the least one component receiving area than the first set of teeth, wherein the at least one component receiving area of the stator has an open side at a lateral side perimeter wall of the stator member, and at least one coil winding on the stator member; and a motor housing having the stator therein, wherein the stator is configured to longitudinally move with the motor housing; and at least one component movably located in the at least one component receiving area of the stator, wherein the at least one component is configured to be axially rotated in the at least one component receiving area of the stator, wherein the at least one component comprises a rod having a screw thread located in the at least one component receiving area of the stator, wherein the rod is configured to rotate in the at least one component receiving area of the stator, wherein the motor housing is connected to the screw thread of the rod such that rotation of the rod causes the motor housing to longitudinally move along the rod.

In accordance with another exemplary aspect, a method comprises providing a stator member having teeth, wherein the stator member comprises a rotor receiving area, wherein the teeth comprise a first set of the teeth and a second set of the teeth, wherein the teeth of the first set of teeth are longer in a radial direction from the rotor receiving area than the teeth of the second set of teeth, wherein the stator member comprises at least one component receiving area of the stator spaced from the rotor receiving area, and wherein the second set of teeth are located closer to the at least one component receiving area of the stator than the first set of teeth, wherein the providing of the stator member comprises providing the at least one component receiving area of the stator with an open side at a lateral side perimeter wall of the stator member; locating at least one coil winding on at least some of the teeth; locating at least one component in the at least one component receiving area of the stator, wherein the at least one component is configured to be axially rotated in the at least one component receiving area of the stator, wherein the at least one component comprises a rod having a screw thread located in the at least one component receiving area of the stator, wherein the rod is configured to rotate in the at least one component receiving area of the stator, and the at least one component receiving area of the stator is configured for the stator to longitudinally move up and down along the rod..

### BRIEF DESCRIPTION OF THE DRAWINGS

The foregoing aspects and other features are explained in the following description, taken in connection with the accompanying drawings, wherein:
Figure 1A is an isometric representation of one exemplary embodiment of a motor assembly not belonging to the invention;
Figure 1B is an isometric representation of a stator of the motor assembly of Figure 1A;
Figure 1C is an isometric representation of a stator core of the motor assembly of Figure 1A;
Figure 1D is a section representation of a stator of the motor assembly of Figure 1A;
Figure 2A is an isometric representation of one exemplary embodiment of a motor assembly not belonging to the invention;
Figure 2B is an isometric representation of a stator of the motor assembly of Figure 2A;
Figure 2C is an isometric representation of a stator core of the motor assembly of Figure 2A;
Figure 2D is a section representation of a stator and rotor of the motor assembly of Figure 2A;
Figure 3A is an isometric representation of one exemplary embodiment of a motor assembly not belonging to the invention;
Figure 3B is an isometric representation of a stator of the motor assembly of Figure 3A;
Figure 3C is an isometric representation of a stator core of the motor assembly of Figure 3A;
Figure 3D is a section representation of a stator and rotor of the motor assembly of Figure 3A;
Figure 4 is an top representation of one exemplary embodiment of a motor assembly not belonging to the invention;
Figure 5 is an top representation of one exemplary embodiment of a motor assembly not belonging to the invention;
Figure 6 is an top representation of one exemplary embodiment of a motor assembly belonging to the invention;
Figure 7 is an top representation of one exemplary embodiment of a motor assembly not belonging to the invention;
Figure 8A is an isometric section representation of one exemplary embodiment of a motor assembly not belonging to the invention;
Figure 8B is an isometric section representation of a stator core of the motor assembly of Figure 8A;
Figure 8C is an isometric section representation of a rotor portion of the motor assembly of Figure 8A;
Figure 9A is an isometric section representation of one exemplary embodiment of a motor assembly not belonging to the invention;
Figure 9B is an isometric representation of a stator core of the motor assembly of Figure 9A;
Figure 9C is a section representation of the motor assembly of Figure 9A;
Figure 9D is an isometric section representation of a stator core of the motor assembly of Figure 9A;
Figure 9E is a partial isometric section representation of a stator core of the motor assembly of Figure 9A;
Figure 10 is an isometric representation of a robot drive;
Figure 11 is an isometric representation of a robot drive;
Figure 12 is a bottom representation of a robot drive;
Figure 13 is a side representation of a robot drive;
Figure 14 is an isometric representation of a robot drive;
Figure 15 is a side representation of a robot drive;
Figure 16 is an exploded isometric representation of a robot drive;
Figure 17 is an exploded isometric representation of a robot drive; and
Figure 18 is an exploded isometric representation of a robot drive.

### DETAILED DESCRIPTION OF EMBODIMENTS

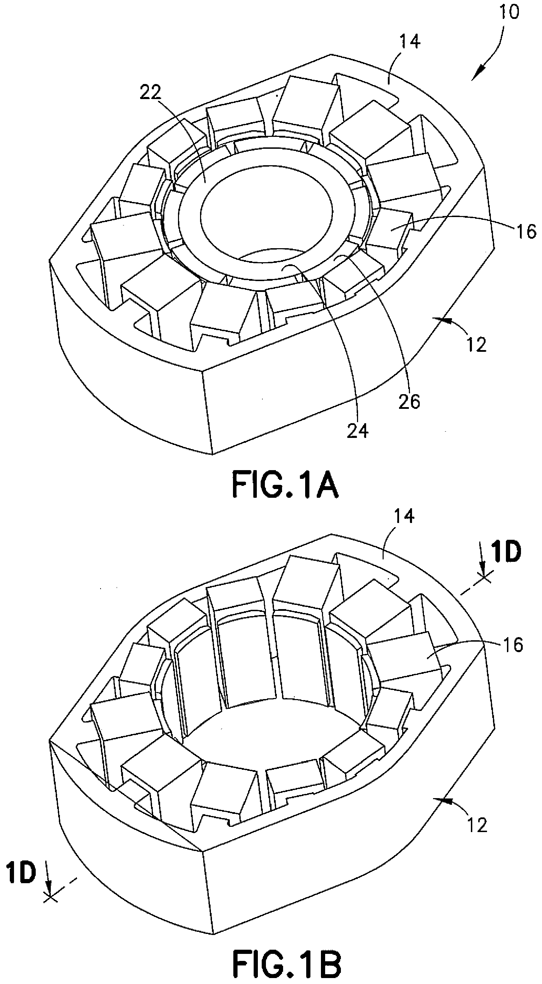

Referring to Fig. 1A, there is shown an isometric representation motor assembly 10 incorporating features of an example embodiment not belonging to the invention. Although the features will be described with reference to the example embodiments shown in the drawings, it should be understood that features can be embodied in many alternate forms of embodiments. In addition, any suitable size, shape or type of elements or materials could be used.

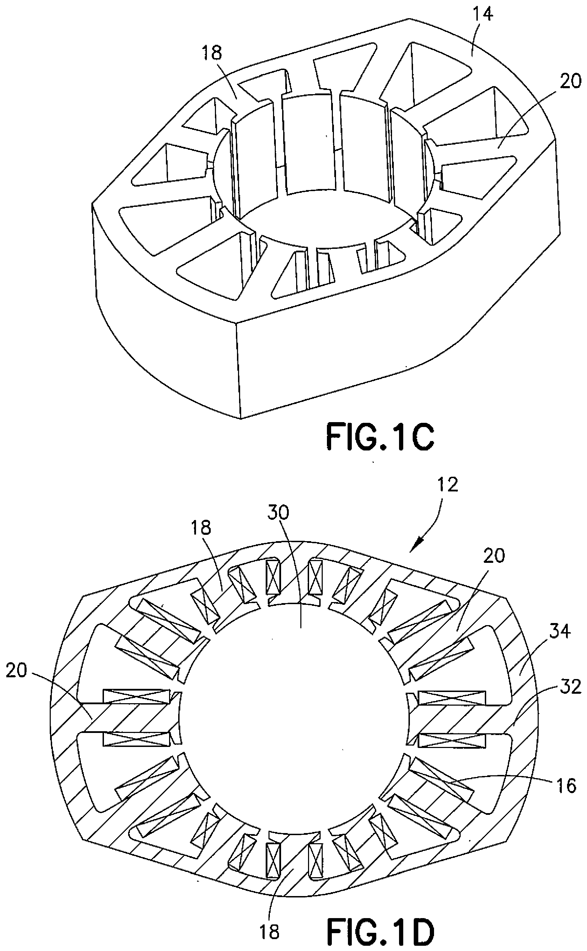

Referring also to Figure 1B, there is shown an isometric representation of stator 12 of motor assembly 10 of Figure 1A. Referring also to Figure 1C, there is shown an isometric representation of stator core 14 of motor assembly 10 of Figure 1A. Referring also to Figure 1D, there is shown a section representation of stator 12 of motor assembly 10 of Figure 1A. Although the features will be described with reference to the example embodiments shown in the drawings, it should be understood that features can be embodied in many alternate forms of embodiments. In addition, any suitable size, shape, or type of elements or materials could be used. For example, as shown, the motor 10 is of a radial flux design. In alternate embodiments, the motor may be of an axial flux design or a hybrid 3-dimensional flux design. The features of the embodiments disclosed herein may similarly be applied to any motor, system, or component incorporating a core comprising a soft magnetic material.

Motor 10 and the subcomponents within motor 10 may have features as disclosed in the following references: U.S. Patent Application Serial No. 14/501,603, entitled "Structures Utilizing a Structured Magnetic Material and Methods for Making" filed September 30, 2014; U.S. Patent Application Serial No. 14/501,668, entitled "Structures Utilizing a Structured Magnetic Material and Methods for Making" filed September 30, 2014; U.S. Patent Publication No. 2014/0009025 A1, entitled "Hybrid Field Electric Motor" published January 9, 2014; U.S. Patent Publication No. 2013/0000861 A1, entitled "System and Method for Making Structured Magnetic Material from Insulated Particles" published January 3, 2013; U.S. Patent Publication No. 2013/0004359 A1, entitled "System and Method for Making a Structured Material" published January 3, 2013; U.S. Patent Publication No. 2013/0002085 A1, entitled "Structured Magnetic Material" published January 3, 2013; U.S. Patent Publication No. 2014/0103752 A1, entitled "Hybrid Motor" published April 17, 2014; U.S. Patent Publication No. 2013/0292081 A1, entitled "System and Method for Making a Structured Magnetic Material with Integrated Particle Insulation" published November 7, 2013; U.S. Patent Publication No. 2013/0000860 A1, entitled "System and Method for Making a Structured Magnetic Material via Layered Particle Deposition" published January 3, 2013; and U.S. Patent Publication No. 2013/0000447 A1, entitled "System and Method for Making a Structured Magnetic Material with Integrated Particle Insulation" published January 3, 2013.

In Figure 1A, motor 10 is shown with a substantially oval shaped stator 12 having stator core 14 and windings 16. In the embodiment shown in Figures 1A -1D, a stator 12 is shown with core 14 that has short 18 and long 20 stator teeth. In alternate aspects, teeth 18, 20 may be the same length or more different lengths. The long teeth 20 may have more winding turns than the short teeth, for example, for more torque output for a given current. Alternately, the long teeth 20 may have the same number of turns as the short teeth, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the embodiment shown, rotor 22 is shown cylindrical and having rotor core 24 and rotor magnets 26. Alternately, the rotor may have any suitable shape. Figure 1A shows a rotor 22 stator 12 combination that makes up motor 10 where motor 10 is shown as a frameless motor. In alternate aspects, a frame may house rotor 22 and stator 12 with suitable bearings for rotor 22 and an output member coupled to rotor 22. In the embodiment shown, two lengths of stator teeth are shown. In alternate aspects more or less different length teeth may be provided with more or less different windings corresponding to the different teeth. In the embodiment, an apparatus is shown as motor 10 having rotor 22 and stator 12 where rotor 22 is located at least partially in rotor receiving area 30 of the stator 12. Stator 12 comprises at least one coil winding 16 and teeth 18, 20. The at least one coil winding 16 is located on at least some of the teeth 18, 20, where the teeth comprise a first set of the teeth 20 and a second set of the teeth 18. The teeth of the first set of teeth 20 are longer in a radial direction from the rotor receiving area 30 than the teeth of the second set of teeth 18. Here, the stator may comprise a stator member forming the teeth. Base 32 of each of the teeth may be located at a portion of the stator member which forms an outer perimeter wall 34 of the stator member. The outer perimeter wall 34 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 16 may be located on the first and second sets of teeth. The at least one coil winding 16 may comprise more winding turns on the first set of teeth than the second set of teeth and/or where the at least one coil winding 16 may comprise thicker wire on the first set of teeth 20 than the second set of teeth 18.

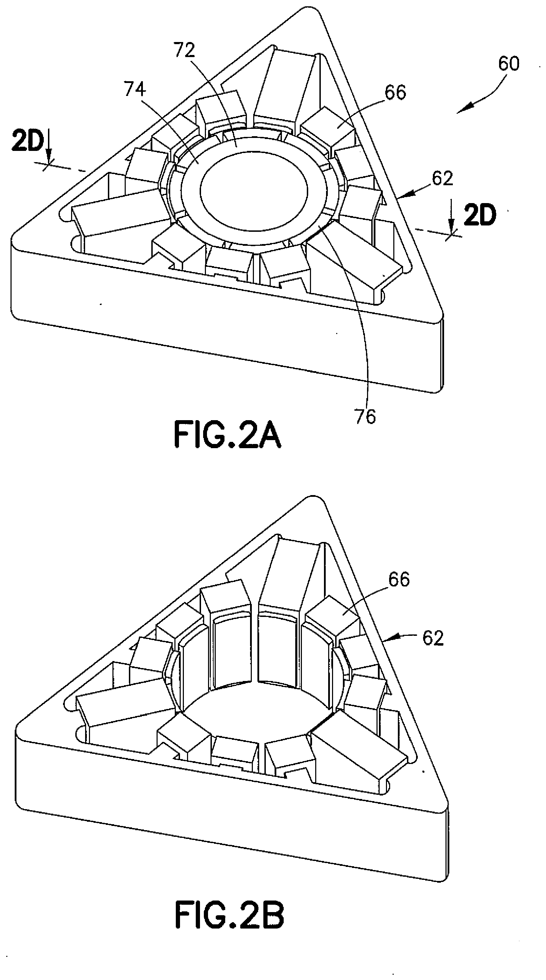

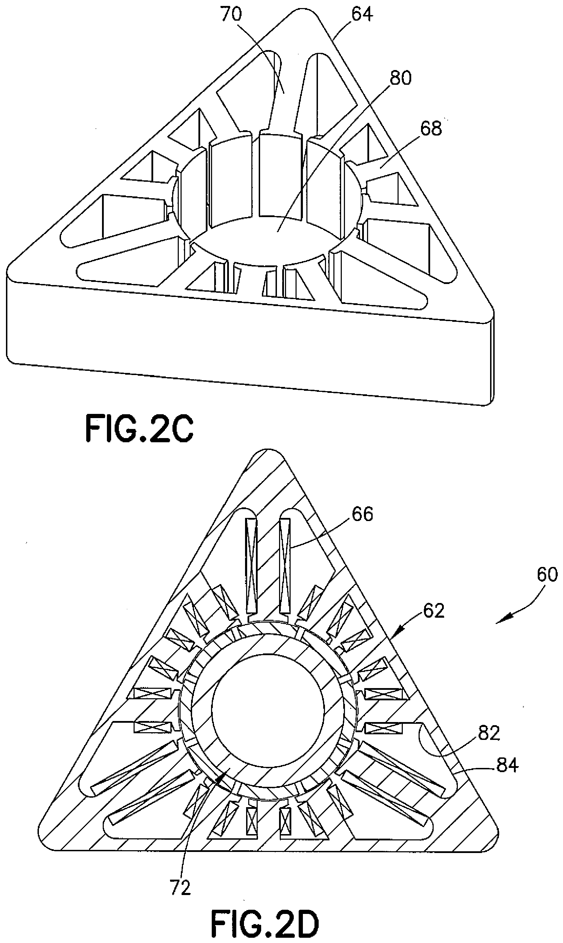

Referring now to Figure 2A, there is shown an isometric representation of motor assembly 60, not belonging to the invention, with a triangular shaped stator 62. Referring also to Figure 2B, there is shown an isometric representation of stator 62 of motor assembly 60 of Figure 2A. Referring also to Figure 2C, there is shown an isometric representation of stator core 64 of motor assembly 60 of Figure 2A. Referring also to Figure 2D, there is shown a section representation of stator 62 of motor assembly 60 of Figure 2A. In Figure 2A, motor 60 is shown where stator 62 is triangular in shape having stator core 64 and windings 66. In the embodiment shown in Figures 2A - 2D, a stator 62 is shown with core 64 that has short 68 and long 70 stator teeth. In alternate aspects, teeth 68, 70 may be the same length or more different lengths. The long teeth 70 may have more winding turns than the short teeth, for example, for more torque output for a given current. Alternately, the long teeth 70 may have the same number of turns as the short teeth, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the embodiment shown, rotor 72 is shown cylindrical and having rotor core 74 and rotor magnets 76. Alternately, the rotor may have any suitable shape. Figure 2A shows a rotor 72 stator 62 combination that makes up motor 60 where motor 60 is shown as a frameless motor. In alternate aspects, a frame may house rotor 72 and stator 62 with suitable bearings for rotor 72 and an output member coupled to rotor 72. In the embodiment shown, multiple lengths of stator teeth are shown. In alternate aspects more or less different length teeth may be provided with more or less different windings corresponding to the different teeth. In the embodiment, an apparatus is shown as motor 60 having rotor 72 and stator 62 where rotor 72 is located at least partially in rotor receiving area 80 of the stator 62. Stator 62 comprises at least one coil winding 66 and teeth 68, 70. The at least one coil winding 66 is located on at least some of the teeth 68, 70, where the teeth comprise a first set of the teeth 70 and a second set of the teeth 68. The teeth of the first set of teeth 70 are longer in a radial direction from the rotor receiving area 80 than the teeth of the second set of teeth 68. Here, the stator may comprise a stator member forming the teeth. Base 82 of each of the teeth may be located at a portion of the stator member which forms an outer perimeter wall 84 of the stator member. The outer perimeter wall 84 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 66 may be located on the first 70 and second 68 sets of teeth. The at least one coil winding 66 may comprise more winding turns on the first set of teeth than the second set of teeth and/or where the at least one coil winding 66 may comprise thicker wire on the first set of teeth than the second set of teeth.

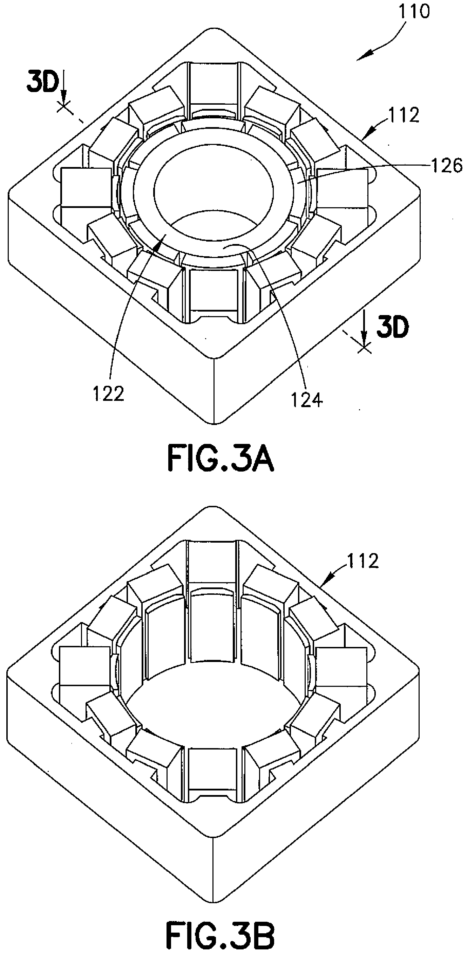

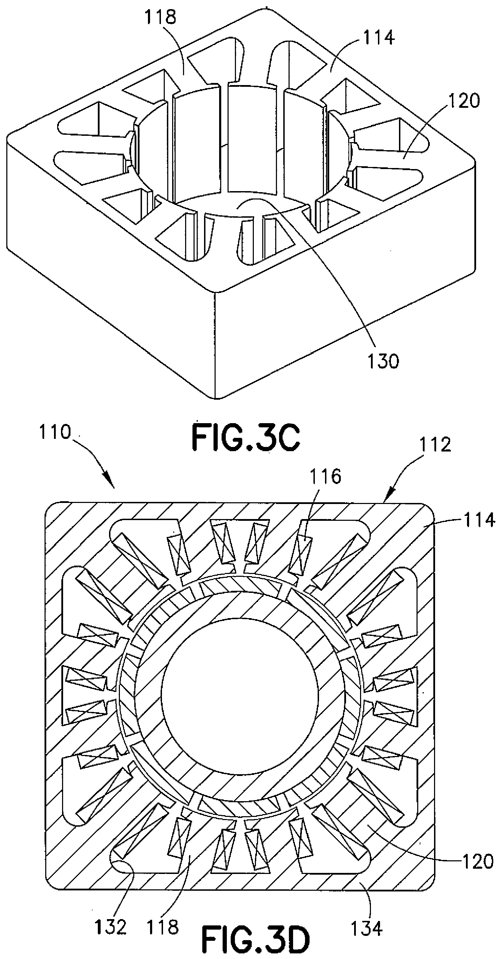

In Figure 3A, motor 110 is shown with a substantially square shaped stator 112 having stator core 114 and windings 116. In the embodiment, not belonging to the invention, shown in Figures 3A - 3D, a stator 112 is shown with core 114 that has short 118 and long 120 stator teeth. In alternate aspects, teeth 118, 120 may be the same length or more different lengths. The long teeth 120 may have more winding turns than the short teeth 118, for example, for more torque output for a given current. Alternately, the long teeth 120 may have the same number of turns as the short teeth 118, but use thicker wire to reduce overall phase resistance. Alternately, a thicker wire may be used on all of the teeth (long and short) and the overall number of winding turns may be maintained the same as a conventional circular motor or higher. For example, in a 3-phase motor, each phase winding may occupy equal numbers of short and long teeth respectively. Alternately, the number of stator teeth is not restricted to 12. In the embodiment shown, rotor 122 is shown cylindrical and having rotor core 124 and rotor magnets 126. Alternately, the rotor may have any suitable shape. Figure 3A shows a rotor 122 stator 112 combination that makes up motor 110 where motor 110 is shown as a frameless motor. In alternate aspects, a frame may house rotor 122 and stator 112 with suitable bearings for rotor 122 and an output member coupled to rotor 122. In the embodiment shown, two lengths of stator teeth are shown. In alternate aspects more or less different length teeth may be provided with more or less different windings corresponding to the different teeth. In the embodiment, an apparatus is shown as motor 110 having rotor 122 and stator 112 where rotor 122 is located at least partially in rotor receiving area 130 of the stator 112. Stator 112 comprises at least one coil winding 116 and teeth 118, 120. The at least one coil winding 116 is located on at least some of the teeth 118, 120, where the teeth comprise a first set of the teeth 120 and a second set of the teeth 118. The teeth of the first set of teeth 120 are longer in a radial direction from the rotor receiving area 130 than the teeth of the second set of teeth 118. Here, the stator may comprise a stator member forming the teeth. Base 132 of each of the teeth may be located at a portion of the stator member which forms an outer perimeter wall 134 of the stator member. The outer perimeter wall 134 may have a shape as one of a substantial oval shape, a substantial triangle shape, a substantial square shape, a substantial rectangle shape or a substantial polygon shape. In alternate aspects, any suitable shape may be provided. In alternate aspects, the at least one coil winding 116 may be located on the first 118 and second 120 sets of teeth. The at least one coil winding 116 may comprise more winding turns on the first set of teeth 118 than the second set of teeth 120 and/or where the at least one coil winding 116 may comprise thicker wire on the first set of teeth 118 than the second set of teeth 120.

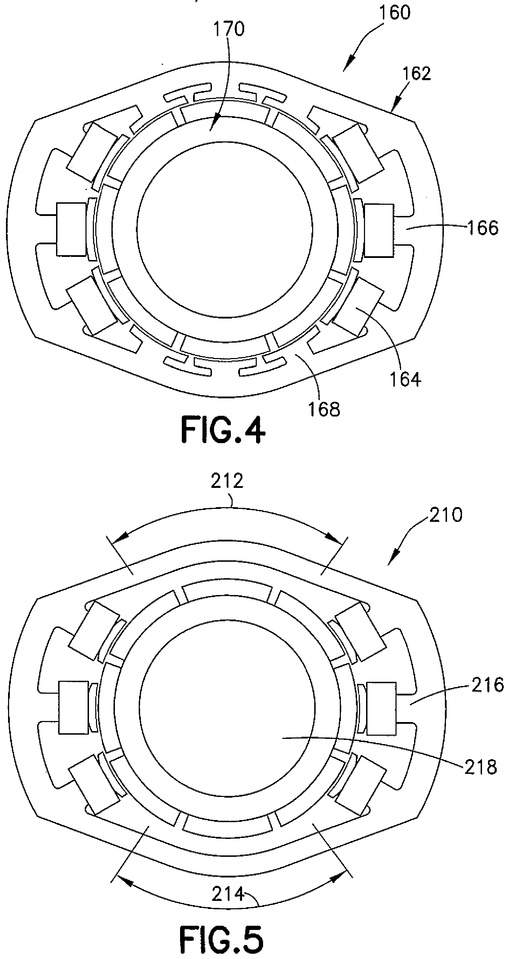

Referring now to Figure 4, there is shown a top representation of one exemplary embodiment of motor assembly 160, not belonging to the invention, having a stator 162 with windings 164 on a subset of the poles 166, 168. Here, in Figure 4, there is shown an oval stator 162 and rotor 170. Here, of the 12 stator teeth, windings are present in only 6 of the teeth. Alternately, more or less teeth and/or windings may be provided. Here, the embodiment allows for a larger rotor and consequently larger ball screw, for example, in a Z motor. Alternately, similar embodiments are possible with shapes or otherwise with respect to the Figures and description here in. Here, the presence of teeth 168 with no coils may enable minimization of cogging torque by way of example. In the apparatus shown, at least one coil winding 164 may be located on a first set of teeth 166 and not located on a second set of teeth 168. In alternate aspects, more or less teeth with more or less windings may be provided. For example, a stator may be provided with no poles or windings along certain directions as shown in Figure 5.

Referring now to Figure 5, there is shown a top representation of one exemplary embodiment of motor assembly 210, not belonging to the invention. In Figure 5, there is shown a similar stator to that shown with respect to Figure 4 but with no teeth in certain stator sections 212, 214. The embodiment may allow for a larger rotor and packaging of a larger ball screw by way of example. Further, the embodiment may be applicable to other shapes, for example, with respect to the figures and description here in. In the apparatus 210 of Figure 5, the teeth 216 may extend radially inward towards the rotor receiving area 218 where the teeth 216 may not be located on two opposite sides 212, 214 of the rotor receiving area 218 along arcs, for example, of about 40-100 degrees or other suitable angles or ranges of angles.

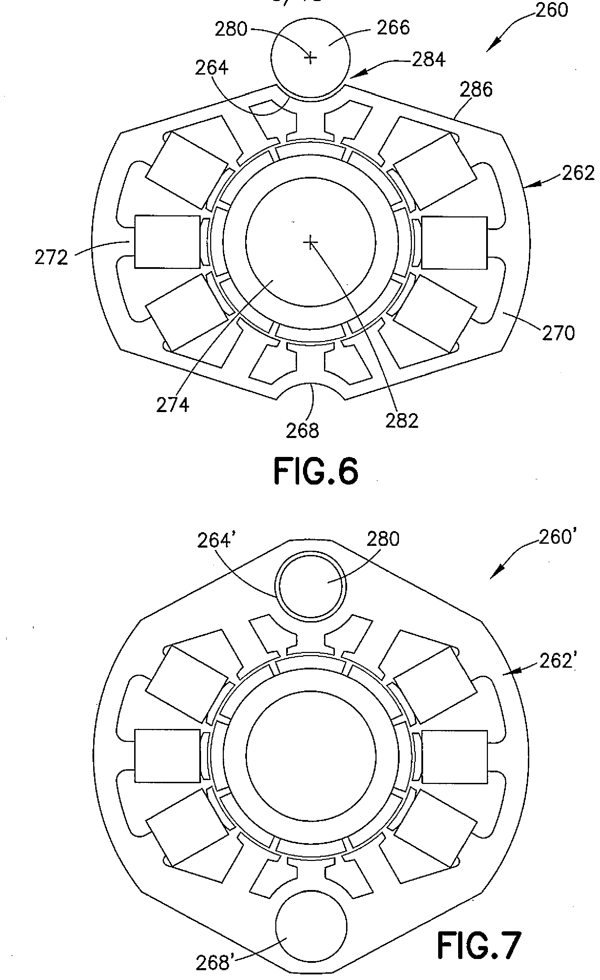

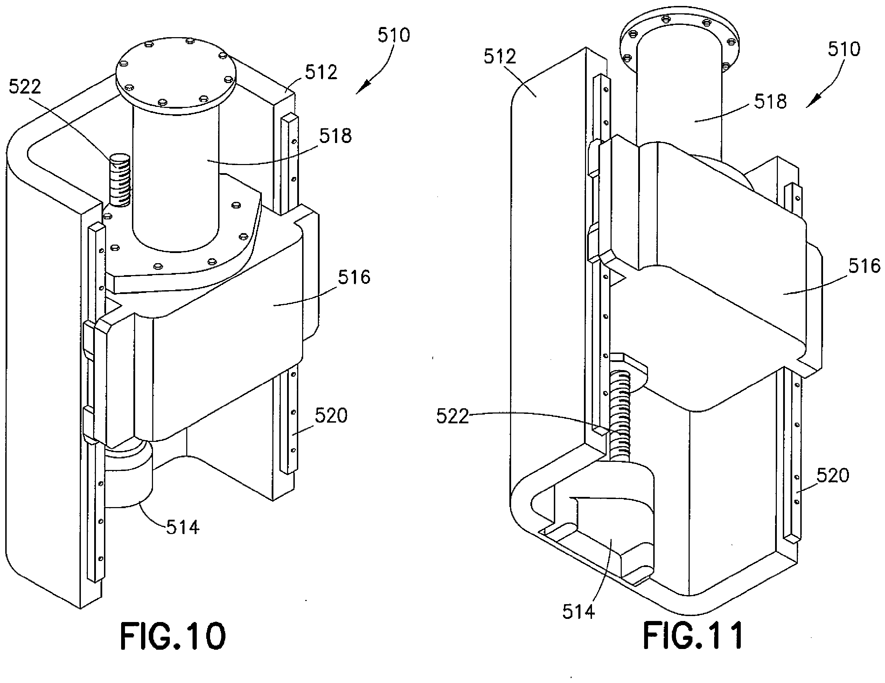

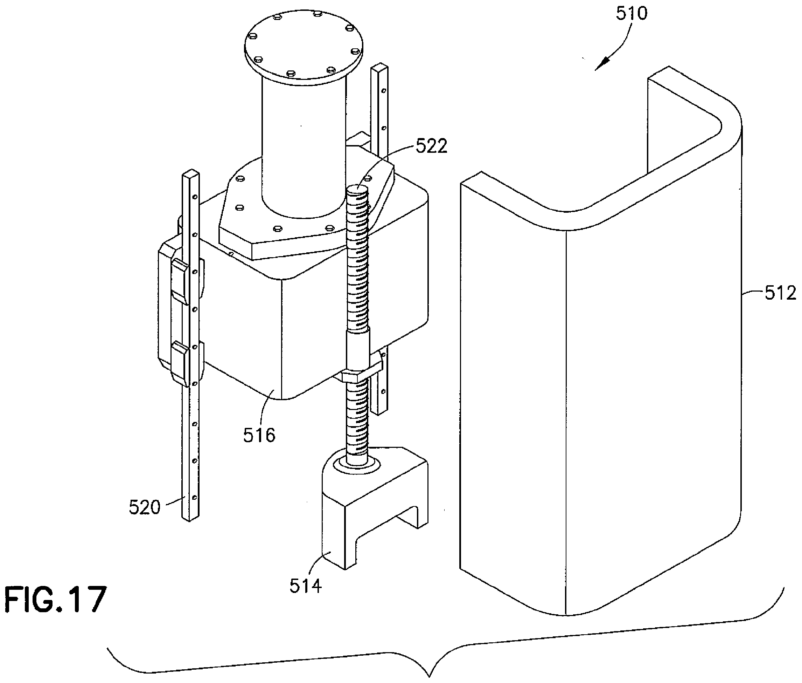

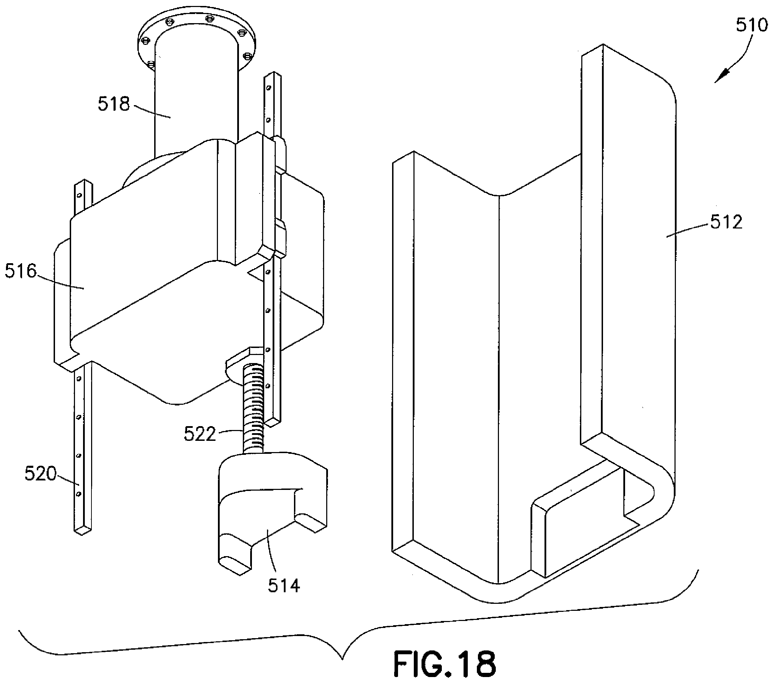

Referring now to Figure 6, there is shown a top representation of one exemplary embodiment of motor assembly 260, belonging to the invention. Motor 260 has stator 262 with a cutout 264 for alternate packaging of other components 266, for example, a Z motor ball screw or otherwise. Cutout 268 may be provided further for symmetry. Alternately, more or less cutouts may be provided. In Figure 6, a variation of Fig. 4 may be shown with opposite sides of the stator recessed 264, 266 to allow packaging of other assembly components - such as ball screw of a Z motor in a robot assembly. The disclosed may further be applied to the figures above alternately. In the apparatus, the stator 262 may comprise a stator member 270 forming teeth 272, where the stator member may comprise at least one component receiving area 264 spaced from the rotor receiving area 274. The at least one component receiving area 264 may be sized and shaped to have a component 266 movably located therein. Here, the at least one component receiving area 264 may have a center axis 280 which is parallel to a center axis 282 of the rotor receiving area 274. The at least one component receiving area 264 has an open side 284 at a lateral side perimeter wall 286 of the stator member 262. Further, in an embodiment not belonging to the invention, the at least one component receiving area 264 may be substantially closed, for example, as seen in Fig. 7, except at top and bottom sides of the stator member. Referring also to Figure 7, there is shown a top representation of an alternate exemplary embodiment of motor assembly 260'. Here, stator 262' is shown with a hole 264' to facilitate packaging, for example, to allow a Z motor ball screw 280. In the embodiment shown in Figure 7, a stator 262' has a hole 264' to allow for a ball screw 280 from another motor, such as a Z motor, to pass through. The disclosed may further be applied to the figures above alternately. Here, at least one component 280 may be movably located in the at least one component receiving area 264 where the at least one component 280 may be a rod having a screw thread located in the at least one component receiving area 264. The rod may be configured to rotate in the at least one component receiving area. The at least one component receiving area may be configured for the stator to longitudinally move up and down along the rod. As shown with respect to Figures 10-18, the apparatus further comprises a motor housing having the stator therein. The motor housing is connected to the screw thread of the rod such that rotation of the rod causes the motor housing to longitudinally move along the rod.

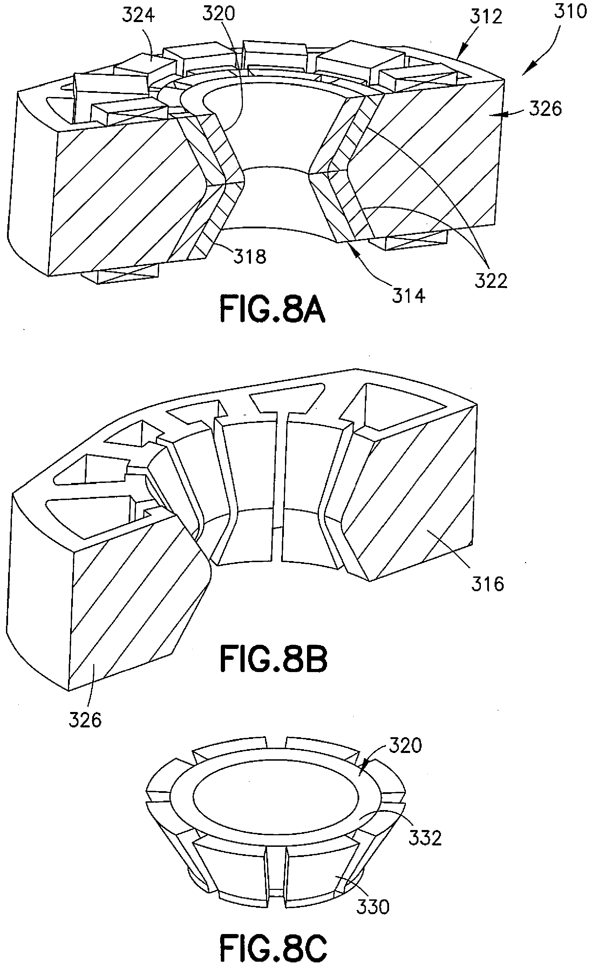

Referring now to Figure 8A, there is shown an isometric section representation of one exemplary embodiment of motor assembly 310, not belonging to the invention, having stator 312 and rotor 314 where rotor 314 has first portion 318 and second portion 320. Here, a non-circular stator with non-cylindrical air gap is shown by way of example. Referring also to Figure 8B, there is shown an isometric section representation of stator core 316 of the motor assembly of Figure 8A. Referring also to Figure 8C, there is shown an isometric section representation of a rotor portion 320 of the motor assembly of Figure 8A. Figures 8A -8C show a rotor stator set with a non-cylindrical air gap 322, for example, to increase overall flux flow through the coils 324. Here, the stator 312 has convex stator teeth 326 and the rotor 314 has concave rotor magnets 330 and yoke 332. Further, the rotor may be made of two halves 318, 320 to facilitate assembly. The disclosed may further be applied to the figures above alternately. Here, a gap 322 may be provided between the stator 312 and the rotor 314 at the rotor receiving area, where the gap 322 has a shape which is not uniformly cylindrical. Here, the rotor 314 may comprise a first top side member 320 and a second bottom side member 318 which have substantial cone shapes orientated in opposite directions. In alternate aspects, other shapes may be used.

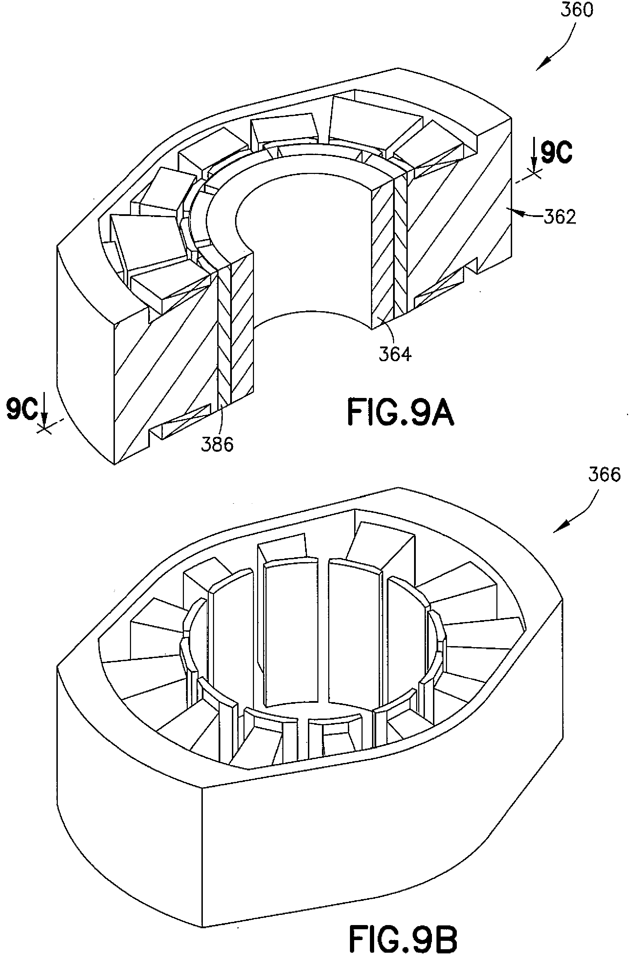

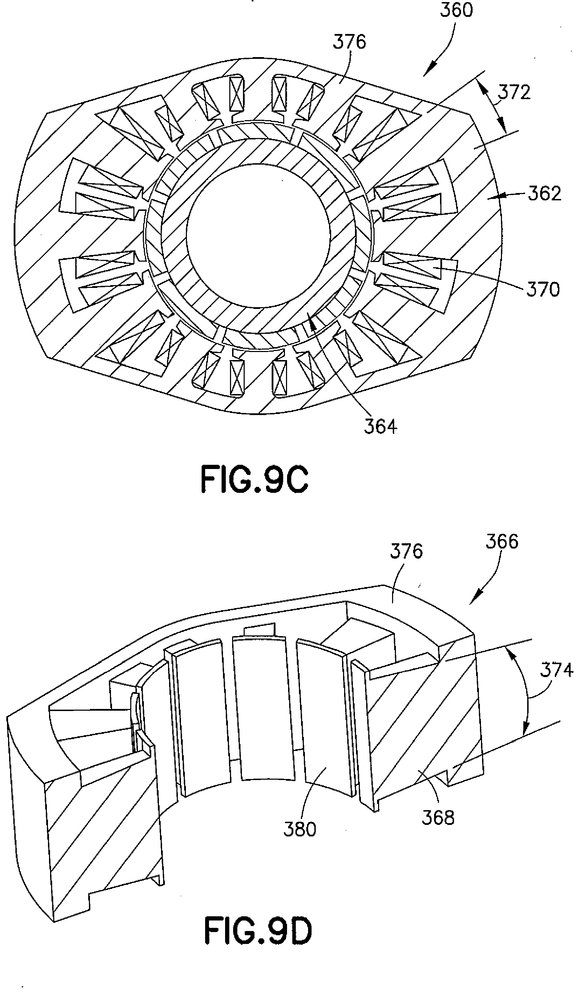

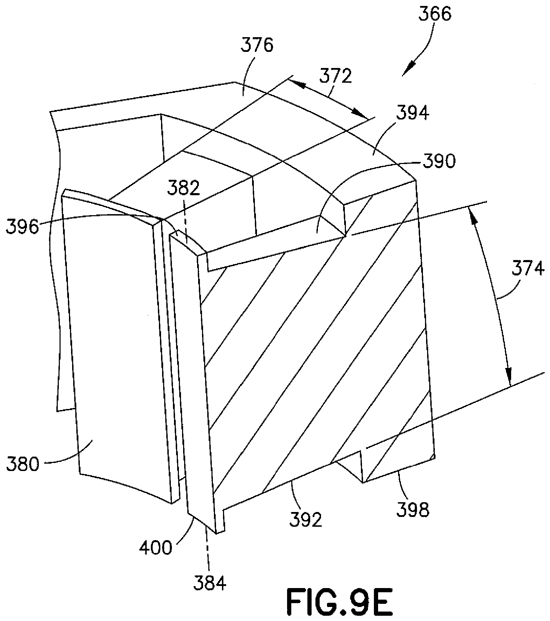

Referring now to Figures 9A - 9E, there is shown an exemplary non-circular stator, not belonging to the invention, with features to facilitate 3-dimensional flux flow. Referring now to Figure 9A, there is shown an isometric section representation of one exemplary embodiment of motor assembly 360 having stator 362 and rotor 364. Referring also to Figure 9B, there is shown an isometric representation of stator core 366 of the motor assembly 360 of Figure 9A. Referring also to Figure 9C, there is shown a section representation of the motor assembly 360 of Figure 9A. Referring also to Figure 9D, there is shown an isometric section representation of stator core 366 of the motor assembly of Figure 9A. Referring also to Figure 9E, there is shown a partial isometric section representation of stator core 366 of the motor assembly of Figure 9A. In Figures 9A - 9E, there are shown stator teeth 368 and coils 370 tapered in two dimensions 372, 374. This provides space for more winding turns. Here, the stator outer wall 376 may be selectively extended in the axial direction to provide more area for flux to flow through. Further, the stator shoe 380, at the inner diameter, may also be extended axially 382, 384 to allow for more area for flux to flow through. Here, the geometry allows the use of longer magnets 386 to increase flux flow. The features may be used together or in any combination. The disclosed may further be applied to the figures above alternately. For example, in the apparatus, at least some of the teeth may taper in two orthogonal directions as shown or otherwise. Here, The stator may comprise a stator member 366 forming the teeth 368, an outer perimeter wall 376 at outer ends of the teeth and respective shoes 380 at inner ends of the teeth. Top 390 and bottom 392 sides of the teeth may be recessed relative to top 394, 396 and bottom 398, 400 sides of the outer perimeter and the shoes respectively. In the apparatus, the stator member may be a one-piece member or alternately, multi piece members.

In alternate aspects, the non-circular stator may be used for slot-less motors as well. For example, this could be in the form of variable number of winding turns along the stator circumference and varying wall thickness. For the disclosed, the stator material may be anisotropic, such as laminated steel or isotropic such as soft magnetic composites. Further, the stator may double up as the motor housing. For example, the stator may have mounting features machined on it and can mount directly to the machinery or driven components. In alternate aspects, any suitable shape, triangular, oval, square or otherwise may be provided with any suitable tooth/magnet combination, for example, 6-tooth configuration, 12-tooth configuration, 24-tooth configuration or otherwise. Similarly, any suitable noncircular stator (any of the above or any suitable cross-sections) with depopulated coils may be provided. Similarly, any suitable noncircular stator with concave shape, e.g., to fit ball-screw or noncircular stator with a through-hole, e.g., to fit ball-screw may be provided. Similarly, any suitable noncircular motor with laminated stator or noncircular motor with composite stator may be provided. Similarly, any suitable noncircular motor with 3D flux features, e.g., recessed coils, or noncircular motor with hybrid-field features, for ezample, conical topology or slot-less noncircular motor may be provided. Similarly any suitable noncircular stator integrated with motor housing may be provided. As shown below, the use of an oval or noncircular motor in a robot may be provided, for example, in a Z-axis embodiment, theta-axis embodiment or otherwise.

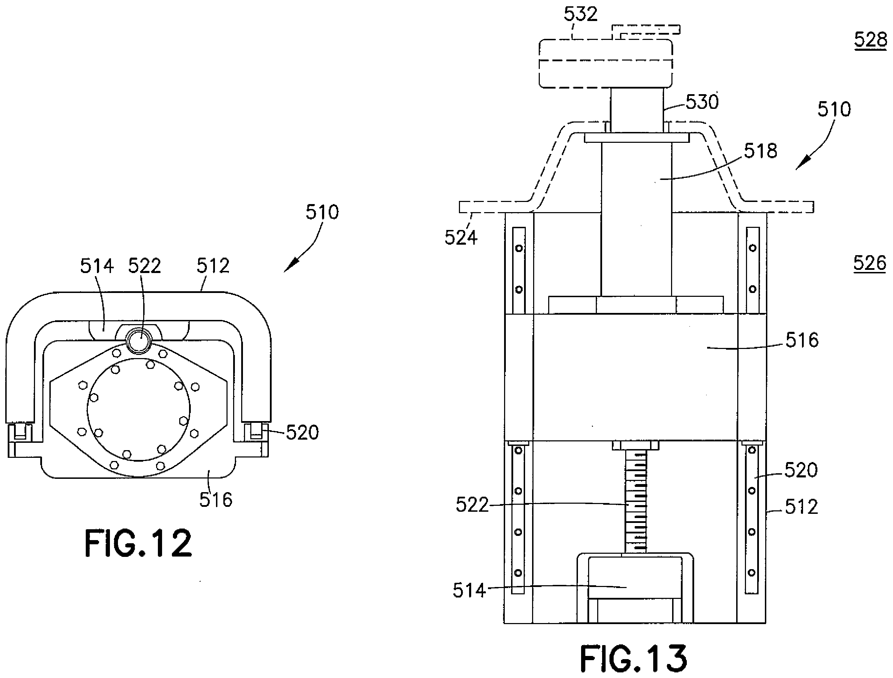

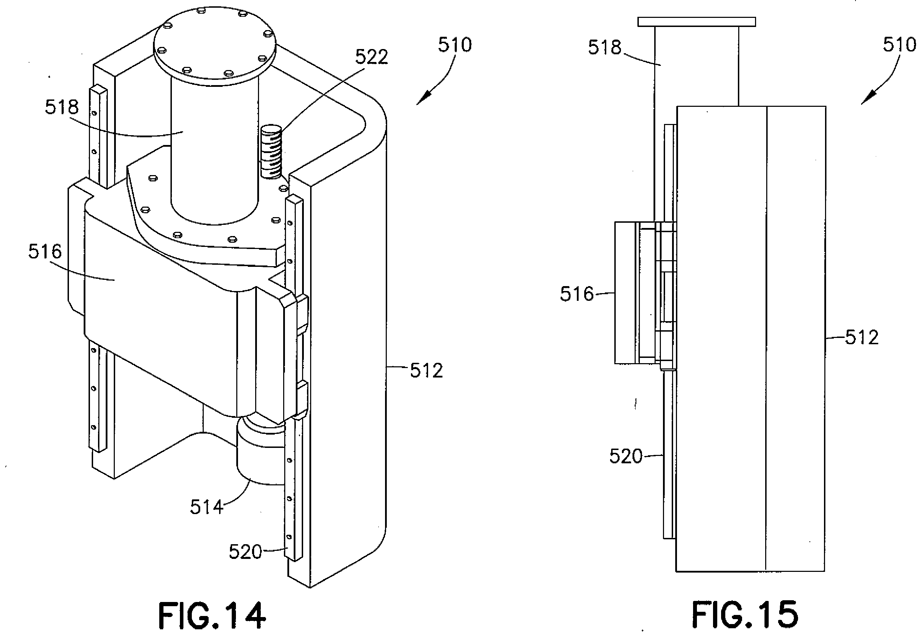

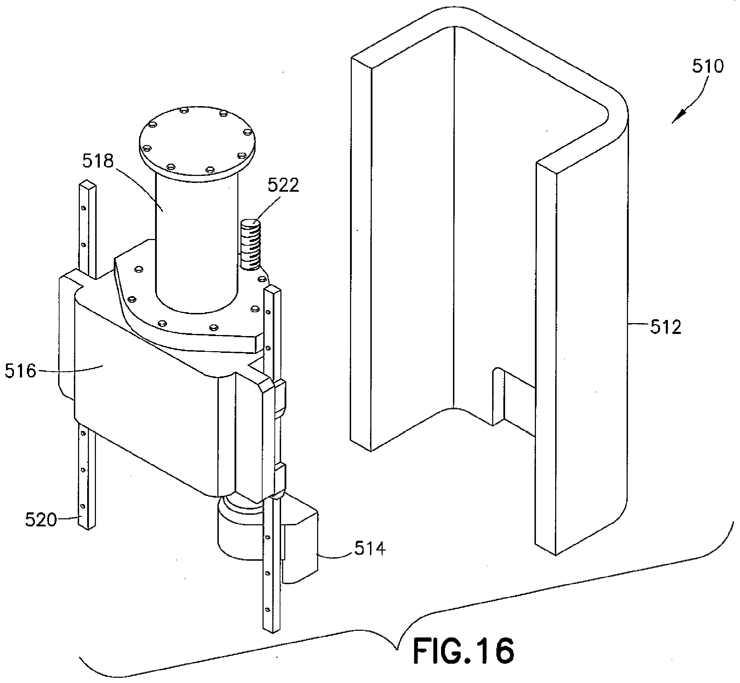

Referring now to Figures 10-11, there are shown isometric representations of robot drive 510. Referring also to Figure 12, there is shown a bottom representation of robot drive 510. Referring also to Figure 13, there is shown a side representation of robot drive 510. Referring also to Figure 14, there is shown an isometric representation of robot drive 510. Referring also to Figure 15, there is shown a side representation of robot drive 510. Referring also to Figures 16-18, there are shown exploded isometric representations of robot drive 510. Robot 510 may have features as disclosed in United States Patent No. 8,716,909 having an issue date of May 6, 2015 and entitled "Robot with Heat Dissipating Stator". Robot 510 has housing 512 with a Z motor assembly and housing 514 coupled at a lower portion of housing 512. Z motor assembly and housing 514 may incorporate features of the non-circular stator and motor assemblies disclosed here in. T motor assembly and housing 516 is vertically moveable within housing 512 and may be coupled to bellows 518 and further coupled to housing 512 via slides 520 which constrain T motor assembly and housing 516 to move in a vertical direction. A rod having a screwthread, which is known in its short form as a screw 522 is coupled to and rotated by Z motor assembly and housing 514 and has a nut coupled to T motor assembly and housing 516 which is driven and vertically moveable within housing 512 by virtue of rotation of screw 522 rotated by a rotor of Z motor assembly and housing 514. According to the invention, the T motor assembly and housing incorporate a rotor and stator as shown in figure 6, where screw 522 may be packaged closer to the center of rotation of T motor assembly and housing 516 as compared to an arrangement with a circular stator. Referring to Figure 13, the apparatus may further comprise one or more drive shaft(s) 530 extending from one or more rotor(s) of T motor assembly and housing 516 and a robot arm 532 connected to the drive shaft. Here, mounting flange 524 may be coupled to housing 512 and bellows 518 separating atmosphere 526 from vacuum 528 where output shaft(s) 530 and arm 532 are in the vacuum environment. Here, Figures 10-18 show a robot drive 510 to illustrate the embodiment of the non-circular motors. Here, non-circular motors are used in any suitable axis to allow for the efficient packaging of additional or complimentary components. For example, the robot may use the non-circular or "football" shaped Z-axis motor and a round or rectangular T-axis motor with a hole though it or a semi-circular cut through it to create a smaller distance from the center of the T-axis motor to the ball-screw. Here, one or more non-circular motors may be provided in a robot to optimize packaging such that the motors can be packaged to utilize space efficiently, for example, ball screw going through the T-motor, reduced distance of the ball-screw axis to the frame due to the shape of the Z-motor or otherwise.

It should be understood that the foregoing description is only illustrative. The scope of the invention is defined by the appended claims.

## Claims

1. An apparatus comprising:
a motor (260) comprising:
a rotor; and
a stator (262), wherein the rotor is located at least partially in a rotor receiving area (274) of the stator (262), wherein the stator (262) comprises:
a stator member (270) having teeth (272) and at least one component receiving area of the stator (264) spaced from the rotor receiving area (274), wherein the teeth (272) comprise a first set of the teeth and a second set of the teeth, wherein the teeth (272) of the first set of teeth are longer in a radial direction from the rotor receiving area (274) than the teeth (272) of the second set of teeth, and wherein the second set of teeth are located closer to the least one component receiving area of the stator(264) than the first set of teeth,
wherein the at least one component receiving area of the stator (264) has an open side (284) at a lateral side perimeter wall of the stator member (270), and
at least one coil winding on the stator member (270); and
a motor housing (516) having the stator (262) therein, wherein the stator (262) is configured to longitudinally move with the motor housing (516); and
at least one component (266) movably located in the at least one component receiving area of the stator (264),wherein the at least one component is configured to be axially rotated in the at least one component receiving area of the stator (264), wherein the at least one component (266) comprises a rod having a screw thread (522) located in the at least one component receiving area of the stator (264), wherein the rod (522) is configured to rotate in the at least one component receiving area of the stator (264),
wherein the motor housing (516) is connected to the screw thread of the rod (522) such that rotation of the rod (522) causes the motor housing (516) to longitudinally move along the rod (522).

2. An apparatus as in claim 1 wherein:
the rod (522) is configured to rotate in the at least one component receiving area of the stator, and the at least one component receiving area of the stator (264) is configured for the stator (262) to longitudinally move up and down along the rod (522), and/or
a base of each of the teeth (272) is located at a portion of the stator member (270) which forms an outer perimeter wall of the stator member (270), and wherein the outer perimeter wall has a substantial oval shape.

3. An apparatus as in any of claims 1 or 2 wherein the at least one component receiving area of the stator has a center axis which is parallel to a center axis of the rotor receiving area (274).

4. A robot drive comprising:
the apparatus as claimed in any of claims 1 to 3; and
a drive shaft connected to the rotor, wherein the drive shaft extends out of the motor housing, and wherein the motor housing (516) comprises at least one component receiving area of the motor housing, wherein the at least one component receiving area of the motor housing (516) has the rod having a screw thread (522) movably located therein.

5. A robot comprising:
the robot drive as in claim 4; and
a robot arm connected to the drive shaft.

6. A robot drive as in claim 4 further comprising a drive housing (512), a connection of the motor housing (516) to the drive housing (512) configured to allow the motor housing (516) to vertically move within the drive housing (512), and wherein the rod having the screw thread (522) is configured to be connected to the motor housing (516) to move the motor housing (516) as the rod having the screw thread (522) is rotated.

7. A robot drive as in claim 6 further comprising a Z motor connected to the drive housing (512) and the rod having the screw thread (522), wherein the Z motor is configured to axially rotate the rod having the screw thread.

8. A method comprising:
providing a stator member (270) having teeth (272), wherein the stator member (270) comprises a rotor receiving area (274), wherein the teeth (272) comprise a first set of the teeth and a second set of the teeth, wherein the teeth (272) of the first set of teeth are longer in a radial direction from the rotor receiving area (274) than the teeth (272) of the second set of teeth, wherein the stator member (270) comprises at least one component receiving area of the stator (264) spaced from the rotor receiving area (274), and wherein the second set of teeth are located closer to the at least one component receiving area of the stator (264) than the first set of teeth,
wherein the providing of the stator member (270) comprises providing the at least one component receiving area of the stator (264) with an open side at a lateral side perimeter wall of the stator member (270);
locating at least one coil winding on at least some of the teeth (272);
locating at least one component in the at least one component receiving area of the stator (264), wherein the at least one component is configured to be axially rotated in the at least one component receiving area of the stator (264),
wherein the at least one component comprises a rod having a screw thread (522) located in the at least one component receiving area of the stator (264), wherein the rod (522) is configured to rotate in the at least one component receiving area of the stator (264), and the at least one component receiving area of the stator (264) is configured for the stator to longitudinally move up and down along the rod.

9. A method as in claim 8 further comprising providing a motor housing (516) having the stator member (270) therein, wherein the motor housing (516) is connected to the screw thread of the rod (522) such that rotation of the rod (522) causes the motor housing (516) to longitudinally move along the rod.

## Patentansprüche

1. Vorrichtung, umfassend:
einen Motor (260), der Folgendes umfasst:
einen Rotor; und
einen Stator (262), wobei sich der Rotor mindestens teilweise in einem Rotoraufnahmebereich (274) des Stators (262) befindet, wobei der Stator (262) Folgendes umfasst:
ein Statorelement (270), das Zähne (272) und mindestens einen Komponentenaufnahmebereich des Stators (264), der von dem Rotoraufnahmebereich (274) beabstandet ist, aufweist, wobei die Zähne (272) einen ersten Satz Zähne und einen zweiten Satz Zähne umfassen, wobei die Zähne (272) des ersten Satzes Zähne in einer radialen Richtung von dem Rotoraufnahmebereich (274) länger sind als die Zähne (272) des zweiten Satzes Zähne, und wobei der zweite Satz Zähne sich näher an dem mindestens einen Komponentenaufnahmebereich des Stators (264) als der erste Satz Zähne befinden,
wobei der mindestens eine Komponentenaufnahmebereich des Stators (264) eine offene Seite (284) an einer lateralen Seitenumfangswand des Statorelements (270) aufweist, und
mindestens eine Spulenwicklung auf dem Statorelement (270); und
ein Motorgehäuse (516), das den Stator (262) darin aufweist, wobei der Stator (262) dazu konfiguriert ist, sich in Längsrichtung mit dem Motorgehäuse (516) zu bewegen; und
mindestens eine Komponente (266), die sich beweglich in dem mindestens einen Komponentenaufnahmebereich des Stators (264) befindet,wobei die mindestens eine Komponente dazu konfiguriert ist, in dem mindestens einen Komponentenaufnahmebereich des Stators (264) axial gedreht zu werden, wobei die mindestens eine Komponente (266) eine Stange, die ein Schraubengewinde (522) aufweist, das sich in dem mindestens einen Komponentenaufnahmebereich des Stators (264) befindet, umfasst, wobei die Stange (522) dazu konfiguriert ist, sich in dem mindestens einen Komponentenaufnahmebereich des Stators (264) zu drehen,
wobei das Motorgehäuse (516) mit dem Schraubengewinde der Stange (522) so verbunden ist, dass eine Drehung der Stange (522) bewirkt, dass sich das Motorgehäuse (516) in Längsrichtung entlang der Stange (522) bewegt.

2. Vorrichtung nach Anspruch 1, wobei:
die Stange (522) dazu konfiguriert ist, sich in dem mindestens einen Komponentenaufnahmebereich des Stators zu drehen, und der mindestens eine Komponentenaufnahmebereich des Stators (264) so konfiguriert ist, dass sich der Stator (262) in Längsrichtung entlang der Stange (522) auf und ab bewegt, und/oder
sich eine Basis jedes der Zähne (272) an einem Abschnitt des Statorelements (270) befindet, der eine Außenumfangswand des Statorelements (270) ausbildet, und wobei die Außenumfangswand eine im Wesentlichen ovale Form aufweist.

3. Vorrichtung nach einem der Ansprüche 1 oder 2, wobei der mindestens eine Komponentenaufnahmebereich des Stators eine Mittelachse aufweist, die parallel zu einer Mittelachse des Rotoraufnahmebereichs (274) ist.

4. Roboterantrieb, umfassend:
die Vorrichtung nach einem der Ansprüche 1 bis 3; und
eine Antriebswelle, die mit dem Rotor verbunden ist, wobei sich die Antriebswelle aus dem Motorgehäuse heraus erstreckt, und wobei das Motorgehäuse (516) mindestens einen Komponentenaufnahmebereich des Motorgehäuses umfasst, wobei der mindestens eine Komponentenaufnahmebereich des Motorgehäuses (516) die Stange aufweist, die ein Schraubengewinde (522) aufweist, das sich darin beweglich befindet.

5. Roboter, umfassend:
den Roboterantrieb nach Anspruch 4; und
einen Roboterarm, der mit der Antriebswelle verbunden ist.

6. Roboterantrieb nach Anspruch 4, ferner umfassend ein Antriebsgehäuse (512), eine Verbindung des Motorgehäuses (516) mit dem Antriebsgehäuse (512), die dazu konfiguriert ist, es dem Motorgehäuse (516) zu ermöglichen, sich innerhalb des Antriebsgehäuses (512) vertikal zu bewegen, und wobei die Stange mit dem Schraubengewinde (522) dazu konfiguriert ist, mit dem Motorgehäuse (516) verbunden zu werden, um das Motorgehäuse (516) zu bewegen, wenn die Stange mit dem Schraubengewinde (522) gedreht wird.

7. Roboterantrieb nach Anspruch 6, ferner umfassend einen Z-Motor, der mit dem Antriebsgehäuse (512) und der Stange mit dem Schraubengewinde (522) verbunden ist, wobei der Z-Motor dazu konfiguriert ist, die Stange mit dem Schraubengewinde axial zu drehen.

8. Verfahren, umfassend:
Bereitstellen eines Statorelements (270), das Zähne (272) aufweist, wobei das Statorelement (270) einen Rotoraufnahmebereich (274) umfasst, wobei die Zähne (272) einen ersten Satz Zähne und einen zweiten Satz Zähne umfassen, wobei die Zähne (272) des ersten Satzes Zähne in einer radialen Richtung von dem Rotoraufnahmebereich (274) länger sind als die Zähne (272) des zweiten Satzes Zähne, wobei das Statorelement (270) mindestens einen Komponentenaufnahmebereich des Stators (264), der von dem Rotoraufnahmebereich (274) beabstandet ist, umfasst, und wobei der zweite Satz Zähne sich näher an dem mindestens einen Komponentenaufnahmebereich des Stators (264) als der erste Satz Zähne befinden,
wobei das Bereitstellen des Statorelements (270) Bereitstellen des mindestens einen Komponentenaufnahmebereichs des Stators (264) mit einer offenen Seite an einer lateralen Seitenumfangswand des Statorelements (270) umfasst;
Anordnen mindestens einer Spulenwicklung auf mindestens einigen der Zähne (272);
Anordnen mindestens einer Komponente in dem mindestens einen Komponentenaufnahmebereich des Stators (264), wobei die mindestens eine Komponente dazu konfiguriert ist, in dem mindestens einen Komponentenaufnahmebereich des Stators (264) axial gedreht zu werden,
wobei die mindestens eine Komponente eine Stange mit einem Schraubengewinde (522) umfasst, das sich in dem mindestens einen Komponentenaufnahmebereich des Stators (264) befindet, wobei die Stange (522) dazu konfiguriert ist, sich in dem mindestens einen Komponentenaufnahmebereich des Stators (264) zu drehen, und der mindestens eine Komponentenaufnahmebereich des Stators (264) so konfiguriert ist, dass sich der Stator in Längsrichtung entlang der Stange auf und ab bewegt.

9. Verfahren nach Anspruch 8, ferner umfassend Bereitstellen eines Motorgehäuses (516) mit dem Statorelement (270) darin, wobei das Motorgehäuse (516) mit dem Schraubengewinde der Stange (522) verbunden ist, sodass eine Drehung der Stange (522) bewirkt, dass sich das Motorgehäuse (516) in Längsrichtung entlang der Stange bewegt.

## Revendications

1. Appareil comprenant :
un moteur (260) comprenant :
un rotor ; et
un stator (262), dans lequel le rotor est situé au moins partiellement dans une zone de réception de rotor (274) du stator (262), dans lequel le stator (262) comprend :
un élément de stator (270) ayant des dents (272) et une zone de réception d'au moins un composant du stator (264) espacée de la zone de réception de rotor (274), dans lequel les dents (272) comprennent un premier ensemble de dents et un second ensemble de dents, dans lequel les dents (272) du premier ensemble de dents sont plus longues dans une direction radiale depuis la zone de réception de rotor (274) que les dents (272) du second ensemble de dents, et dans lequel le second ensemble de dents sont situés plus près de la zone de réception d'au moins un composant du stator (264) que le premier ensemble de dents,
dans lequel la zone de réception d'au moins un composant du stator (264) a un côté ouvert (284) au niveau d'une paroi de périmètre de côté latéral de l'élément de stator (270), et
au moins un enroulement de bobine sur l'élément de stator (270) ; et
un carter de moteur (516) ayant le stator (262) dans celui-ci, dans lequel le stator (262) est configuré pour se déplacer longitudinalement avec le carter de moteur (516) ; et
au moins un composant (266) situé de manière mobile dans la zone de réception d'au moins un composant du stator (264), dans lequel l'au moins un composant est conçu pour être tourné axialement dans la zone de réception d'au moins un composant du stator (264), dans lequel l'au moins un composant (266) comprend une tige ayant un filetage (522) situé dans la zone de réception d'au moins un composant du stator (264), dans lequel la tige (522) est conçue pour tourner dans la zone de réception d'au moins un composant du stator (264),
dans lequel le carter de moteur (516) est relié au filetage de la tige (522) de sorte que la rotation de la tige (522) amène le carter de moteur (516) à se déplacer longitudinalement le long de la tige (522).

2. Appareil selon la revendication 1, dans lequel :
la tige (522) est conçue pour tourner dans la zone de réception d'au moins un composant du stator, et la zone de réception d'au moins un composant du stator (264) est conçue pour que le stator (262) se déplace longitudinalement vers le haut et vers le bas le long de la tige (522), et/ou
une base de chacune des dents (272) est située au niveau d'une partie de l'élément de stator (270) qui forme une paroi de périmètre extérieur de l'élément de stator (270), et dans lequel la paroi de périmètre extérieur a une forme sensiblement ovale.

3. Appareil selon l'une quelconque des revendications 1 ou 2, dans lequel la zone de réception d'au moins un composant du stator a un axe central qui est parallèle à un axe central de la zone de réception de rotor (274).

4. Entraînement de robot comprenant :
l'appareil selon l'une quelconque des revendications 1 à 3 ; et
un arbre d'entraînement relié au rotor, dans lequel l'arbre d'entraînement s'étend hors du carter de moteur, et dans lequel le carter de moteur (516) comprend une zone de réception d'au moins un composant du carter de moteur, dans lequel la zone de réception d'au moins un composant du carter de moteur (516) a la tige ayant un filetage (522) située de manière mobile dans celle-ci.

5. Robot comprenant :
l'entraînement de robot selon la revendication 4 ; et
un bras de robot relié à l'arbre d'entraînement.

6. Entraînement de robot selon la revendication 4, comprenant en outre un boîtier d'entraînement (512), une connexion du carter de moteur (516) au boîtier d'entraînement (512) étant conçue pour permettre au carter de moteur (516) de se déplacer verticalement à l'intérieur du boîtier d'entraînement (512), et dans lequel la tige ayant le filetage de vis (522) est conçue pour être connectée au carter de moteur (516) afin de déplacer le carter de moteur (516) au fur et à mesure de la rotation de la tige ayant le filetage (522).

7. Entraînement de robot selon la revendication 6, comprenant en outre un moteur Z relié au boîtier d'entraînement (512) et à la tige ayant le filetage (522), dans lequel le moteur Z est conçu pour faire tourner axialement la tige ayant le filetage.

8. Procédé comprenant :
la fourniture d'un élément de stator (270) ayant des dents (272), dans lequel l'élément de stator (270) comprend une zone de réception de rotor (274), dans lequel les dents (272) comprennent un premier ensemble de dents et un second ensemble de dents, dans lequel les dents (272) du premier ensemble de dents sont plus longues dans une direction radiale depuis la zone de réception de rotor (274) que les dents (272) du second ensemble de dents, dans lequel l'élément de stator (270) comprend une zone de réception d'au moins un composant du stator (264) espacée de la zone de réception de rotor (274), et dans lequel le second ensemble de dents est situé plus près de la zone de réception d'au moins un composant du stator (264) que le premier ensemble de dents, dans lequel la fourniture de l'élément de stator (270) comprend la fourniture de la zone de réception d'au moins un composant du stator (264) avec un côté ouvert au niveau d'une paroi de périmètre de côté latéral de l'élément de stator (270) ;
le positionnement d'au moins un enroulement de bobine sur au moins certaines des dents (272) ;
le positionnement d'au moins un composant dans la zone de réception d'au moins un composant du stator (264), dans lequel l'au moins un composant est conçu pour être tourné axialement dans la zone de réception d'au moins un composant du stator (264),
dans lequel l'au moins un composant comprend une tige ayant un filetage (522) situé dans la zone de réception d'au moins un composant du stator (264), dans lequel la tige (522) est conçue pour tourner dans la zone de réception d'au moins un composant du stator (264), et la zone de réception d'au moins un composant du stator (264) est conçue pour que le stator se déplace longitudinalement vers le haut et vers le bas le long de la tige.

9. Procédé selon la revendication 8, comprenant en outre la fourniture d'un carter de moteur (516) ayant l'élément de stator (270) dans celui-ci,
dans lequel le carter de moteur (516) est relié au filetage de la tige (522) de sorte que la rotation de la tige (522) amène le carter de moteur (516) à se déplacer longitudinalement le long de la tige.
